# EUROPEAN PATENT APPLICATION

(11) **EP 3 654 074 A1**
(43) Date of publication of application: **20.05.2020**
(21) Application number: 18832720.9
(22) Date of filing: 10.07.2018
(51) Int. Cl.: G02B 3/08, B29C 33/42, B29C 59/02

(54) **FRESNEL LENS AND PRODUCTION METHOD FOR SAME**

(30) Priority: 11.07.2017 JP 2017135254
(71) Applicant: Daicel Corporation, Osaka-shi, Osaka 530-0011 (JP)
(72) Inventor: FUJIKAWA, Takeshi, Himeji-shi Hyogo 671-1283 (JP); FUKUI, Sadayuki, Himeji-shi Hyogo 671-1283 (JP)
(74) Representative: Grünecker Patent- und Rechtsanwälte PartG mbB
(86) International application number: PCT/JP2018/026063
(87) International publication number: WO 2019/013211

(57) **Abstract**

Provided is a Fresnel lens that includes prisms with a mountain-like shape disposed at narrow pitches and having a shape in which a slope from a protruded part to a recessed part is steep, and a production method of the Fresnel lens. The Fresnel lens according to the present invention is a molded and cured product of a curable composition having a contact angle with respect to a mold of 50° or less, wherein the Fresnel lens includes two or more prisms concentrically, and a cross-sectional face of the two or more prisms has a mountain-like shape in which a ratio (h/w) of a height (h) to a width (w) is 0.3 or greater, and the height (h) is 0.5 mm or less. The mold is preferably a silicone mold. A breaking strain of a cured product of the curable composition is preferably from 0.1% to 30%.

## Description

### Technical Field

The present invention relates to a Fresnel lens having excellent optical characteristics and a production method for the same. The present application claims priority to JP 2017-135254 filed to Japan on July 11, 2017, the content of which is incorporated herein.

### Background Art

A camera mounted on a portable electronic device such as a smartphone is provided with a flash lens in front of a light source in order to diffuse light from the light source. As the flash lens, a Fresnel lens applicable to a thinner and smaller camera is mainly used.

A Fresnel lens is a lens whose thickness is reduced by cutting a spherical lens having a continuous lens surface or an aspheric lens concentrically or the like, and has a structure in which prisms having a mountain-like shape are formed in a stepped shape. Furthermore, it is known that in a case that the division number of a lens surface of the Fresnel lens is increased, the Fresnel lens becomes thinner, and an effect of further enhancing light condensing characteristics is obtained (Patent Document 1).

As a production method for the Fresnel lens, for example, a method is known that includes using and injection molding a thermoplastic resin such as polycarbonate, polymethyl methacrylate, or cycloolefin polymer (Patent Document 2, 3). However, especially in the Fresnel lens with the large division number of the lens surface, prisms having a mountain-like shape are disposed at narrow pitches, and thus, a slope from a protruded part to a recessed part of the prism becomes steep. This causes problems in that an unfilled part is formed in a case that a thermoplastic resin with a low fluidity is used, and bubbles are generated, decreasing shape accuracy and thus degrading the optical characteristics. Furthermore, the molded product obtained from the thermoplastic resin has low heat resistance and cannot be mounted on a circuit board by reflow soldering together with other components, and this is also a problem from the perspective of work efficiency.

### Citation List

### Patent Document

Patent Document 1: JP 2010-262187 A
Patent Document 2: JP 2013-212593 A
Patent Document 3: JP 2013-224349 A

### Summary of Invention

### Technical Problem

Therefore, an object of the present invention is to provide a Fresnel lens including prisms with a mountain-like shape disposed at narrow pitches and having a shape in which a slope from a protruded part to a recessed part of the prisms is steep.

Another object of the present invention is to provide a Fresnel lens including prisms with a mountain-like shape disposed at narrow pitches and having a shape in which a slope from a protruded part to a recessed part of the prisms is steep; and having excellent optical characteristics and heat resistance.

Another object of the present invention is to provide a method for producing a Fresnel lens with a high accuracy that includes prisms with a mountain-like shape disposed at narrow pitches and having a shape in which a slope from a protruded part to a recessed part of the prisms is steep.

Another object of the present invention is to provide a method for producing a Fresnel lens with a high accuracy that includes prisms with a mountain-like shape disposed at narrow pitches and having shape in which a slope from a protruded part to a recessed part of the prisms is steep; and has excellent optical characteristics and heat resistance.

### Solution to Problem

As a result of diligent research to solve the problems described above, the following results are founded. In a case that a Fresnel lens that includes prisms with a mountain-like shape disposed at narrow pitches and having a shape in which a slope from a protruded part to a recessed part of the prisms is steep is molded by using a mold, it is difficult to fill a fine portion (e.g., a part for forming a tip portion in the mountain shape) with a curable composition. As a result, a Fresnel lens in which a part (e.g., a tip portion in the mountain-like shape or the like) is missing may be obtained. However, in a case that a curable composition that has a contact angle with respect to a mold of 50° or less and is wettable to a mold is used and molded using the mold, the mold is filled without leaving unfilled parts in the fine portions of the mold. After the mold is filled with the curable composition, the curable composition is subjected to light irradiation or heat treatment. As a result, the Fresnel lens with excellent shape accuracy can be formed. The present invention has been completed based on these findings.

In other words, the present invention provides a Fresnel lens that is a molded and cured product of a curable composition having a contact angle with respect to a mold of 50° or less, and the Fresnel lens includes two or more prisms concentrically. A cross-sectional face of the two or more prisms has a mountain-like shape in which a ratio (h/w) of a height (h) to a width (w) is 0.3 or greater, and the height (h) is 0.5 mm or less.

The present invention also provides the Fresnel lens wherein a breaking strain (according to JIS-K7162:1994) of a cured product of the curable composition is from 0.1% to 30%.

The present invention also provides a method for producing a Fresnel lens, the method including molding and curing a curable composition by using a mold, wherein the following Fresnel lens is produced by using a curable composition having a contact angle with respect to a mold of 50° or less.

The Fresnel lens includes two or more prisms concentrically, and a cross-sectional face of the two or more prisms is a mountain-like shape in which a ratio (h/w) of a height (h) to a width (w) is 0.3 or greater, and the height (h) is 0.5 mm or less.

The present invention also provides the method for producing a Fresnel lens, wherein the mold is a silicone mold.

The present invention also provides the method for producing a Fresnel lens, wherein the curable composition is a cationic curable composition containing an epoxy resin as a curable compound.

The present invention also provides the method for producing a Fresnel lens, wherein the molding is performed by a nanoimprint method.

The present invention also provides the method for producing a Fresnel lens, wherein a viscosity of the curable composition at 25°C and a shear rate of 20 (1/s) is from 0.01 to 10.0 Pa·s.

The present invention also provides the method for producing a Fresnel lens, wherein a breaking strain (according to JIS-K7162:1994) of a cured product of the curable composition is from 0.1% to 30%.

### Advantageous Effects of Invention

The Fresnel lens of the present invention includes two or more prisms (a prism that is composed of an incident surface and a reflective surface) concentrically, the two or more prisms being disposed at narrow pitches, having a shape in which a slope from a protruded part to a recessed part is steep, and not having a missing part, and thus, the Fresnel lens can exhibit excellent optical characteristics. Therefore, the Fresnel lens can be suitably used as, for example, a Fresnel lens for a sensor or a Fresnel lens for a camera for a mobile electronic device such as a mobile phone or a smart phone.

In addition, according to a method for producing a Fresnel lens of the present invention, a Fresnel lens can be produced with a high accuracy in which the prisms with a mountain-like shape are disposed at narrow pitches and have a shape in which a slope from a protruded part to a recessed part is steep.

In the method for producing a Fresnel lens of the present invention, in a case that a cationic curable composition containing an epoxy resin is used as the curable composition, a Fresnel lens having excellent shape accuracy and excellent optical characteristics can be obtained, and furthermore, the Fresnel lens can have excellent heat resistance. Thus, the obtained Fresnel lens can be mounted on a circuit board by reflow soldering (especially, lead free solder), and an optical device on which the Fresnel lens is mounted can be produced with excellent work efficiency. Furthermore, the optical component can also be used in an electronic device for an automobile for which high heat resistance is required.

### Brief Description of Drawings

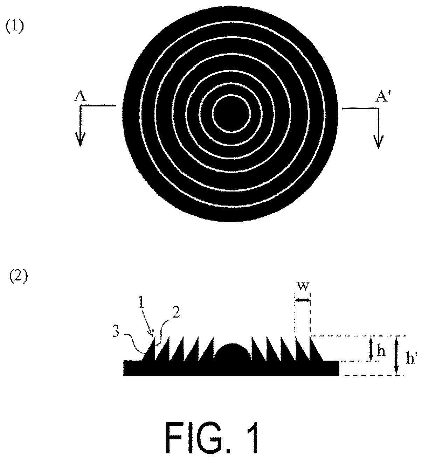

FIG. 1 is a schematic view illustrating a Fresnel lens obtained in Examples (a plan view (1) and a cross-sectional view (2) at a position A-A' in the plan view).

### Description of Embodiments

### Fresnel Lens

The Fresnel lens of the present invention is a molded and cured product of a curable composition having a contact angle with respect to a mold of 50° or less (that is, a molded product molded with a mold), and includes two or more prisms (e.g., ring-shaped prisms) concentrically. In addition, a cross-sectional face of the prism has a mountain-like shape in which a ratio (h/w) of a height (h) to a width (w) is 0.3 or greater and the height (h) is 0.5 mm or less.

The Fresnel lens of the present invention may include at least a circular lens part and include a flange part around the lens part. The lens part includes two or more (e.g., from 2 to 100, preferably from 5 to 100) prisms concentrically. A cross-sectional face of the Fresnel lens in the present invention (a cross-sectional face obtained by cutting the Fresnel lens along a face including a center point of the Fresnel lens and perpendicular to a Fresnel lens face) is such that the mountain-like cross-sectional shapes of the prisms are disposed axisymmetrically like a saw tooth.

The diameter of the lens part in the Fresnel lens is, for example, from 1 to 100 mm, preferably from 1 to 50 mm.

The ratio (h/w) of the height (h) to the width (w) in the mountain-like shape is 0.3 or greater, preferably 0.4 or greater, and particularly preferably 0.5 or greater. Note that the upper limit of the ratio is, for example, 5, preferably 3.

Furthermore, the height (h) in the mountain-like shape is 0.5 mm or less, preferably is 0.4 mm or less, and particularly preferably is 0.3 mm or less. Note that the lower limit is, for example, approximately 0.05 mm.

Therefore, the width (w) in the mountain-like shape is, for example, 1.6 mm or less, preferably is 1.0 mm or less, more preferably is 0.8 mm or less, and particularly preferably is 0.6 mm or less. Note that the lower limit is, for example, approximately 0.05 mm.

A thickness (the maximum thickness, h') of the thickest part of the Fresnel lens is, for example, from 0.1 to 3.0 mm, preferably from 0.1 to 1.5 mm.

A breaking strain (according to JIS-K7162:1994) of a cured product of a curable composition constituting the Fresnel lens of the present invention is preferably from 0.1 to 30%, for example, from the perspective of excellent releasability.

The cured product of the curable composition constituting the Fresnel lens of the present invention preferably has excellent transparency, and the light transmittance (in a case that the wavelength is 450 nm and the thickness of the cured product is 100 µm) is preferably 80% or greater, and more preferably 90% or greater.

The cured product of the curable composition constituting the Fresnel lens of the present invention preferably has excellent heat resistance, and the glass transition temperature (Tg) is preferably 100°C or higher.

Since the Fresnel lens of the present invention has the configuration described above and therefore has excellent optical characteristics, the Fresnel lens is suitably used, for example, as a diffusion lens or an imaging lens. In addition, the Fresnel lens is preferably used as a sensor lens or a camera lens for a mobile electronic device such as a mobile phone or a smart phone.

### Method for Producing Fresnel Lens

A method for producing a Fresnel lens of the present invention is a method including molding and curing a curable composition using a mold. The Fresnel lens describe above is produced by using a curable composition having a contact angle with respect to a mold of 50° or less.

### Curable Composition

The contact angle with respect to a mold of the curable composition of the present invention is 50° or less, preferably 45° or less, particularly preferably 40° or less, most preferably 35° or less, and most especially preferably 30° or less. As a result, the curable composition of the present invention has excellent wettability with respect to the mold so that generation of cissing and bubbles can be suppressed, and the mold can be filled with the curable composition without leaving an unfilled part. Note that the contact angle (θ) of the curable composition is obtained by, for example, a θ/2 method.

The curable composition in the present invention preferably has a low viscosity in that the filling property for a mold is excellent, and the generation of bubbles can be further reduced. The viscosity at 25°C and a shear rate of 20 (1/s) is, for example, from 0.01 to 10.0 Pa·s, preferably from 0.1 to 5.0 Pa·s, especially preferably from 0.1 to 1.0 Pa·s. Note that the viscosity can be measured using a rheometer (product name "PHYSICA UDS200", available from Anton Paar).

Furthermore, the curable composition of the present invention preferably have a breaking strain of the cured product of, for example, not less than 0.1% (preferably not less than 0.3%, and especially preferably not less than 0.5%). Also, the upper limit of the breaking strain is, for example, 30%, preferably 20%, especially preferably 10%, most preferably 5%, most especially preferably 3%. Note that the breaking strain can be measured in accordance with JIS-K7162:1994 using a test piece 5B type. In a case that the breaking strain of the cured product is within the range described above, it is possible to suppress the occurrence of brittleness in the Fresnel lens, and when releasing the lens from the mold, it is possible to prevent the cured product from chipping or cracking. That is, the curable composition has excellent mold releasability.

Furthermore, the curable composition of the present invention preferably has a low viscosity as described above before heat treatment and/or irradiation with ultraviolet light is performed, and the curable composition is preferable that can be rapidly cured to form a cured product having excellent optical characteristics in a case that heat treatment and/or irradiation with ultraviolet light is performed. In the present invention, a cationic curable composition is preferable from the perspective of having excellent curability even in the presence of oxygen, and in particular, a composition containing an epoxy resin as a cationic curable compound is preferable from the perspective of that the cured product having excellent optical characteristics (especially transparency) and having both high hardness and heat resistance can be obtained. Furthermore, a photocurable composition that is cured by irradiation with ultraviolet light is preferable.

As the epoxy resin, a known or commonly used compound having one or more epoxy groups (oxirane ring) in a molecule can be used. Examples thereof include alicyclic epoxy compounds, aromatic epoxy compounds, and aliphatic epoxy compounds. In an embodiment of the present invention, among these, from the perspective of that a cured product having excellent heat resistance and transparency can be formed, a polyfunctional alicyclic epoxy compound having an alicyclic structure and having two or more epoxy groups as functional groups in a molecule is preferred.

Specific examples of the polyfunctional alicyclic epoxy compound include
(i) a compound having an epoxy group formed from two adjacent carbon atoms and an oxygen atom constituting an alicycle (that is, alicyclic epoxy group),
(ii) a compound having an epoxy group directly bonded to an alicycle through a single bond, and
(iii) a compound having an alicycle and a glycidyl group.

Examples of the compound (i) including an alicyclic epoxy group described above include compounds represented by Formula (i) below.

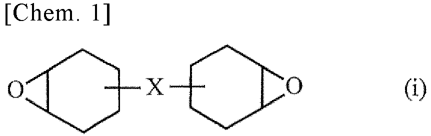

In Formula (i) above, X represents a single bond or a linking group (a divalent group having one or more atoms). Examples of the linking group include divalent hydrocarbon groups, alkenylene groups in which some or all of the carbon-carbon double bonds are epoxidized, carbonyl groups, ether bonds, ester bonds, carbonate groups, amide groups, and groups in which a plurality thereof are linked. Note that, the cyclohexene oxide group in Formula (i) may be bonded to a substituent group (for example, an alkyl group or the like).

Examples of the divalent hydrocarbon group include straight-chain or branched alkylene groups having from 1 to 18 carbons, divalent alicyclic hydrocarbon groups, and the like. Examples of the straight-chain or branched alkylene group having from 1 to 18 carbons include a methylene group, a methyl methylene group, a dimethyl methylene group, an ethylene group, a propylene group, a trimethylene group, and the like. Examples of the divalent alicyclic hydrocarbon group include cycloalkylene groups (including cycloalkylidene groups), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the alkenylene group in the alkenylene group in which some or all of the carbon-carbon double bonds are epoxidized (which may be referred to as "epoxidized alkenylene group") include straight-chain or branched alkenylene groups having from 2 to 8 carbons, such as a vinylene group, a propenylene group, a 1-butenylene group, a 2-butenylene group, a butadienylene group, a pentenylene group, a hexenylene group, a heptenylene group, and an octenylene group. In particular, the epoxidized alkenylene group is preferably an alkenylene group in which all of the carbon-carbon double bonds are epoxidized; and more preferably an alkenylene group having from 2 to 4 carbons in which all of the carbon-carbon double bonds are epoxidized.

Representative examples of the compound represented by Formula (i) above include (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-l-yl)ethane, compounds represented by Formulas (i-1) to (i-10) below, and the like. L in Formula (i-5) below is an alkylene group having from 1 to 8 carbons, and among these, a straight-chain or branched alkylene group having from 1 to 3 carbons, such as a methylene group, an ethylene group, a propylene group, or an isopropylene group, is preferred. In Formulas (i-5), (i-7), (i-9), and (i-10) below, n¹ to n⁸ each represent an integer from 1 to 30.

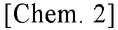

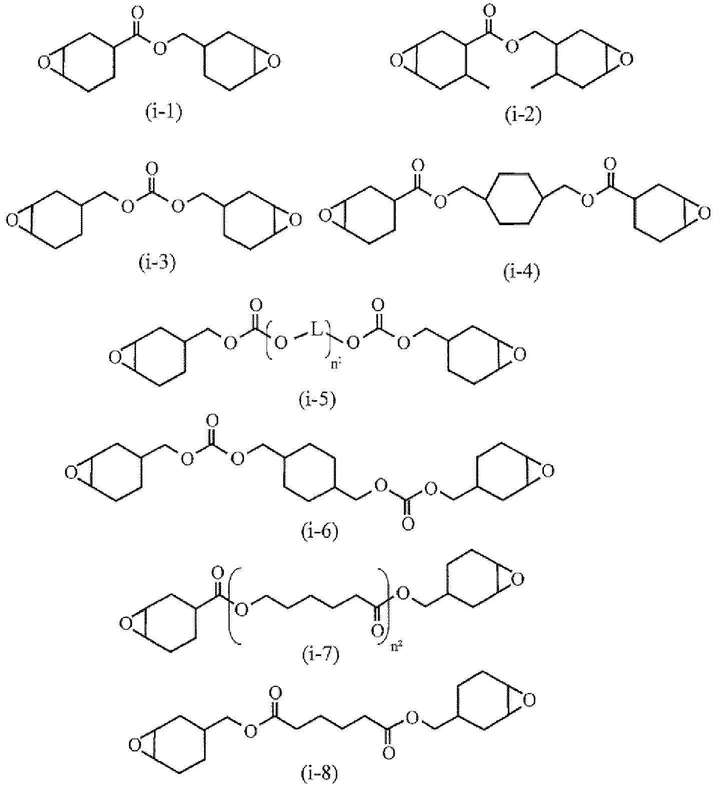

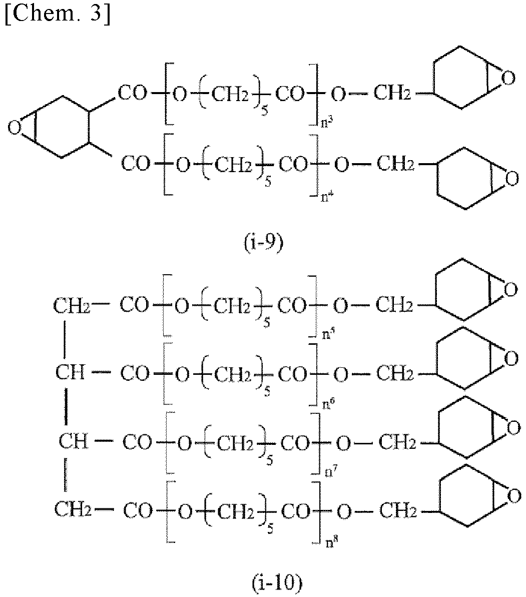

The compound (i) having an alicyclic epoxy group described above includes epoxy-modified siloxanes. Examples of the epoxy-modified siloxane include chain-like or cyclic polyorganosiloxanes each having a structural unit represented by Formula (i') below.

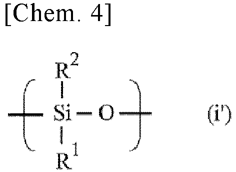

In Formula (i') above, R¹ represents a substituent containing an epoxy group represented by Formula (1a) or (1b) below, and R² represents an alkyl group or an alkoxy group.

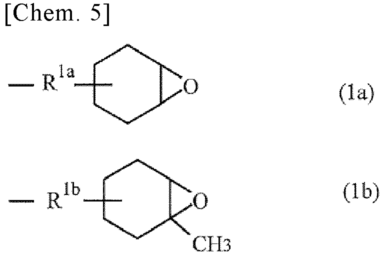

In Formulas (1a) and (1b), R^{1a} and R^{1b} may be the same or different and each represent a straight-chain or branched alkylene group, and examples thereof include straight-chain or branched alkylene groups having from 1 to 10 carbons, such as a methylene group, a methyl methylene group, a dimethyl methylene group, an ethylene group, a propylene group, a trimethylene group, a tetramethylene group, a pentamethylene group, a hexamethylene group, and a decamethylene group.

The epoxy equivalent weight (in accordance with JIS K 7236) of the epoxy-modified siloxane is, for example, from 100 to 400 and preferably from 150 to 300.

As the epoxy-modified siloxane, for example, commercially available products, such as epoxy-modified cyclic polyorganosiloxane represented by Formula (i'-1) below (trade name "X-40-2670", available from Shin-Etsu Chemical Co., Ltd.), can be used.

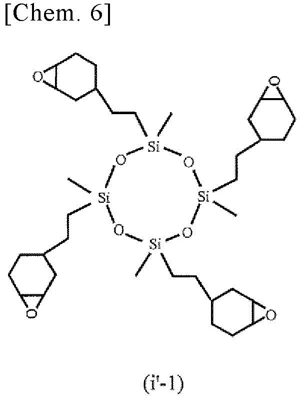

Examples of the compound (ii) having an epoxy group directly bonded to an alicycle through a single bond include compounds represented by Formula (ii) below and the like.

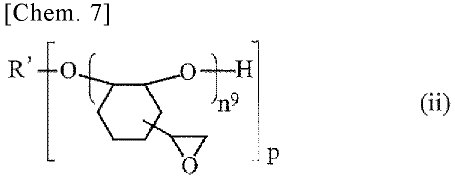

In Formula (ii), R' is a group resulting from elimination of p hydroxy groups (-OH) from a structural formula of a p-valent alcohol (p-valent organic group), where p and n⁹ each represent a natural number. Examples of the p-valent alcohol [R'-(OH)ₚ] include polyhydric alcohols (alcohols having from 1 to 15 carbons and the like), such as 2,2-bis(hydroxymethyl)-1-butanol; and the like. p is preferably from 1 to 6, and n⁹ is preferably from 1 to 30. When p is 2 or greater, n⁹ in each group in parentheses (in the outer parentheses) may be the same or different. Examples of the compound represented by Formula (ii) specifically include 1,2-epoxy-4-(2-oxiranyl)cyclohexane adduct of 2,2-bis(hydroxymethyl)-1-butanol (for example, such as the trade name "EHPE3150" (available from Daicel Corporation)).

Examples of the compound (iii) including an alicycle and a glycidyl group described above include hydrogenated aromatic glycidyl ether epoxy compounds, such as hydrogenated bisphenol A epoxy compound, hydrogenated bisphenol F epoxy compound, hydrogenated biphenol epoxy compounds, hydrogenated phenol novolac epoxy compounds, hydrogenated cresol novolac epoxy compounds, hydrogenated cresol novolac epoxy compounds of bisphenol A, hydrogenated naphthalene epoxy compounds, and hydrogenated epoxy compounds of epoxy compounds obtained from trisphenol methane.

The polyfunctional alicyclic epoxy compound is preferably a compound (i) including an alicyclic epoxy group from the perspective of that a cured product having great surface hardness and excellent heat resistance and transparency is obtained, and a compound represented by Formula (i) above (especially, (3,4,3',4'-diepoxy)bicyclohexyl) is especially preferable.

The curable composition of the present invention may also contain another cationic curable compound besides the epoxy resin as the cationic curable compound and, for example, may contain an oxetane compound or a vinyl ether compound. In addition to the cationic curable compound, the curable composition may contain a radical curable compound as the curable compound.

A proportion of the epoxy resin in a total amount (100 wt.%) of the curable compound contained in the curable composition is preferably, for example, 50 wt.% or greater from the perspective of that a cured product having great surface hardness and excellent transparency can be obtained, more preferably 60 wt.% or greater, especially preferably 70 wt.% or greater, and most preferably 80 wt.% or greater. Note that the upper limit is, for example, 100 wt.% and preferably 90 wt.%.

In addition, a proportion of the compound (i) including an alicyclic epoxy group in the total amount (100 wt.%) of the curable compound contained in the curable composition is preferably, for example, 20 wt.% or greater from the perspective of that a cured product having great surface hardness and excellent transparency can be obtained, more preferably 30 wt.% or greater, and especially preferably 40 wt.% or greater. Note that the upper limit is, for example, 70 wt.% and preferably 60 wt.%.

A proportion of the compound represented by Formula (i) in the total amount (100 wt.%) of the curable compound contained in the curable composition is preferably, for example, 10 wt.% or greater from the perspective of that a cured product having great surface hardness and excellent transparency can be obtained, more preferably 15 wt.% or greater, and especially preferably 20 wt.% or greater. Note that the upper limit is, for example, 50 wt.% and preferably 40 wt.%.

The curable composition preferably contains a polymerization initiator together with the curable compound. The polymerization initiator includes a photopolymerization initiator and a thermal polymerization initiator. In the present invention, the polymerization initiator preferably includes a photopolymerization initiator from the perspective of that a cured product can be formed more quickly. Therefore, in a case that the curable composition contains a cationic curable compound, a polymerization initiator preferably contains a photocationic polymerization initiator.

The photocationic polymerization initiator is a compound that initiates curing reaction of the curable compound (especially, cationic curable compound) contained in the curable composition by generating an acid when irradiated with light and is formed from a cation moiety that absorbs light and an anion moiety that serves as a source of generation of the acid.

Examples of the photocationic polymerization initiator include diazonium salt-based compounds, iodonium salt-based compounds, sulfonium salt-based compounds, phosphonium salt-based compounds, selenium salt-based compounds, oxonium salt-based compounds, ammonium salt-based compounds, and bromine salt-based compounds.

In the present invention, among these, use of a sulfonium salt-based compound is preferred because a cured product having excellent curability can be formed. Examples of the cation moiety of the sulfonium salt-based compound include arylsulfonium ions (especially, triarylsulfonium ions), such as a (4-hydroxyphenyl)methylbenzylsulfonium ion, a triphenyl sulfonium ion, a diphenyl[4-(phenylthio)phenyl]sulfonium ion, a 4-(4-biphenylthio)phenyl-4-biphenylylphenylsulfonium ion, and a tri-p-tolylsulfonium ion.

Examples of the anion moiety of the photocationic polymerization initiator include [(Y)ₛB(Phf)₄₋ₛ]⁻ (in the formula, Y represents a phenyl group or a biphenylyl group, Phf represents a phenyl group in which at least one hydrogen atom is replaced with at least one type selected from the group consisting of a perfluoroalkyl group, a perfluoroalkoxy group, and a halogen atom, and s is an integer from 0 to 3.), BF₄⁻, [(Rf)ₜPF₆₋ₜ]⁻ (in the formula, Rf represents an alkyl group in which 80% or greater of hydrogen atoms are replaced with fluorine atoms, and t represents an integer from 0 to 5.), AsF₆⁻; SbF₆⁻; SbF₅OH⁻; and the like.

Commercially available products can be used as photocationic polymerization initiators in an embodiment of the present invention. Examples thereof include (4-hydroxyphenyl)methylbenzylsulfonium tetrakis(pentafluorophenyl)borate; 4-(4-biphenylylthio)phenyl-4-biphenylylphenylsulfonium tetrakis(pentafluorophenyl)borate; 4-(phenylthio)phenyldiphenylsulfonium phenyltris(pentafluorophenyl)borate; [4-(4-biphenylylthio)phenyl]-4-biphenylylphenylsulfonium phenyltris(pentafluorophenyl)borate; diphenyl[4-(phenylthio)phenyl]sulfonium tris(pentafluoroethyl)trifluorophosphate; diphenyl[4-(phenylthio)phenyl]sulfonium tetrakis(pentafluorophenyl)borate; diphenyl[4-(phenylthio)phenyl]sulfonium hexafluorophosphate; 4-(4-biphenylylthio)phenyl-4-biphenylylphenylsulfonium tris(pentafluoroethyl)trifluorophosphate; bis[4-(diphenylsulfonio)phenyl]sulfide phenyltris(pentafluorophenyl)borate; [4-(2-thioxanthonylthio)phenyl]phenyl-2-thioxanthonylsulfonium phenyltris(pentafluorophenyl)borate; 4-(phenylthio)phenyldiphenylsulfonium hexafluoroantimonate; the trade names "Cyracure UVI-6970", "Cyracure UVI-6974", "Cyracure UVI-6990", and "Cyracure UVI-950" (the above available from Union Carbide Corporation, USA); "Irgacure250", "Irgacure261", and "Irgacure264" (the above available from BASF Corporation); "CG-24-61" (available from Ciba-Geigy Corporation); "Optomer SP-150", "Optomer SP-151", "Optomer SP-170", and "Optomer SP-171" (the above available from ADEKA Corporation); "DAICAT II" (available from Daicel Corporation); "UVAC1590" and "UVAC1591" (the above available from Daicel-Cytec Co., Ltd.); "CI-2064", "CI-2639", "CI-2624", "CI-2481", "CI-2734", "CI-2855", "CI-2823", "CI-2758", and "CIT-1682" (the above available from Nippon Soda Co., Ltd.); "PI-2074" (tetrakis(pentafluorophenyl)borate tolylcumyliodonium salt, available from Rhodia Japan Ltd.); "FFC509" (available from 3M Company); "BBI-102", "BBI-101", "BBI-103", "MPI-103", "TPS-103", "MDS-103", "DTS-103", "NAT-103", and "NDS-103" (the above available from Midori Kagaku Co., Ltd.); "CD-1010", "CD-1011", and "CD-1012" (the above available from Sartomer Co., Ltd., USA); and"CPI-100P" and "CPI-101A" (the above available from San-Apro Ltd.).

The content of the polymerization initiator is, for example, in a range from 0.1 to 5.0 parts by weight per 100 parts by weight of the curable compound (especially, cationic curable compound) contained in the curable composition. In a case that the content of the polymerization initiator is not less than 0.1 parts by weight, excellent curability can be exhibited, and curing failure can be suppressed. In addition, in a case that the content of the polymerization initiator is not greater than 5.0 parts by weight, coloration of the cured product can be suppressed, and a cured product having excellent transparency can be formed.

The curable composition in the present invention can be produced by mixing the curable compound, the polymerization initiator, and, as necessary, an additional component (for example, such as a solvent, an antioxidant, a surface conditioner, a photosensitizer, an anti-foaming agent, a leveling agent, a coupling agent, a surfactant, a flame retardant, an ultraviolet absorber, and a colorant). The content of the other components is, for example, 20 wt.% or less, preferably 10 wt.% or less, and especially preferably 5 wt.% or less, relative to the total amount of the curable composition.

Curable compositions commercially available under the trade name, for example, such as, "CELVENUS OUH106" (available from Daicel Corporation) can also be used in the present invention.

### Mold

The mold used in the present invention is a mold having excellent wettability to the curable composition, where a contact angle of the curable composition is 50° or less (preferably 45° or less, particularly preferably 40° or less, most preferably 35° or less, and most especially preferably 30° or less). In the present invention, since the mold is used, the mold can be filled with the curable composition without causing cissing and leaving an unfilled part.

As the mold, a silicone mold is preferable, from the perspective of excellent releasability. The silicone mold is composed of a cured product of a silicone resin composition.

The silicone resin composition includes an addition reaction type silicone resin composition and a condensation reaction type silicone resin composition. In the present invention, an addition reaction type silicone resin composition is preferable in that curing shrinkage is suppressed, and expansion and shrinkage due to changes in the temperature of the obtained cured product (i.e. silicone mold) are suppressed.

The addition reaction type silicone resin composition includes a silicone resin (e.g., a siloxane having two or more alkenyl groups in a molecule), a curing agent (e.g., a siloxane having two or more hydrosilylation groups (Si-H) in a molecule), and a hydrosilylation catalyst (e.g., a platinum-based catalyst).

By using the silicone resin composition, a crosslinked structure with a high density can be quickly formed by performing heat treatment, and a cured product having moderate elasticity and excellent heat resistance can be formed.

The silicone mold consists of the cured product of the silicone resin composition, and includes at least one recessed part (preferably, a plurality of recessed parts (e.g., 10 or more, preferably 20 or more, particularly preferably 30 or more, most preferably 50 or more)) having a reverse shape of the Fresnel lens in the surface, where the Fresnel lens includes two or more prisms concentrically, and a cross-sectional face of the two or more prisms has a mountain-like shape in which a ratio (h/w) of a height (h) to a width (w) is 0.3 or greater, and the height (h) is 0.5 mm or less. Note that, the upper limit of the number of recessed parts with a reversed shape is, for example, 5000, preferably 2000. Furthermore, the silicone mold may have a two-part configuration of an upper mold and a lower mold.

The silicone mold may be a mold of which a release agent is applied to the surface. Examples of the release agent include fluorine-based release agents, silicone-based release agents, and wax-based release agents. One type alone or two or more types thereof in combination can be used.

### Molding of Curable Composition

As a method for molding the curable composition using a mold, molding by a nanoimprint is preferable. The molding by the nanoimprint is a method of obtaining a molded product by pressing a mold against a curable composition to transfer the recess shape of the mold and curing the curable composition to which the recess shape is transferred.

Examples of molding a curable composition using a mold include the following (1) to (3).
(1) a method including: applying a curable composition to a substrate; pressing a mold onto the substrate; curing the curable composition; and then separating the mold from the resultant.
(2) a method including: applying a curable composition to a mold; pressing a substrate onto the mold; curing the curable composition; and then separating the mold from the resultant.
(3) a method including: applying a curable composition to at least one of an upper mold or a lower mold; combining the upper mold and the lower mold; curing the curable composition; and separating the upper mold and the lower mold from each other.

As the substrate, a substrate having a light transmittance at a wavelength of 400 nm of 90% or greater is preferably used, and a substrate made of quartz or glass can be suitably used. Note that the light transmittance at the wavelength is determined by using the substrate (thickness: 1 mm) as a test piece, and measuring the light transmittance at the wavelength of light emitted to the test piece using a spectrophotometer.

As a method for applying the curable composition, a spray method, a spin coating method, and a screen printing method, or the like, can be used.

Curing of the curable composition is performed, for example, by emitting ultraviolet light in the case that a photocurable composition is used. A high-pressure mercury lamp, ultra-high pressure mercury lamp, carbon arc lamp, xenon lamp, metal halide lamp or the like is used as the light source when irradiation with ultraviolet light is performed. The exposure amount varies depending on the type of light source, the distance between the light source and the coated surface, and other conditions; however, the exposure amount is, for example, about 500 to 3000 mJ/cm². After the irradiation with the ultraviolet light, as necessary, heating (post curing) may be performed to promote the curing.

After curing the curable composition, the obtained cured product is separated from the mold to obtain the Fresnel lens. A silicone mold is preferable as the mold from the perspective of that the Fresnel lens can be easily separated, and the Fresnel lens can be prevented from being damaged during peeling.

In a case that a mold including a plurality of recesses in which a shape of a Fresnel lens is inverted is used as a mold, a molded product in which a plurality of Fresnel lenses are connected with a joint therebetween is obtained. The Fresnel lens is obtained by dividing the obtained molded product into individual pieces by dicing or the like.

### Example(s)

Hereinafter, the present invention will be described more specifically with reference to examples, however, the present invention is not limited by these examples.

Note that, for a contact angle with respect to a mold (silicone mold or metal mold) of a curable composition, a contact angle (θ) in a case that one drop of a curable composition is applied to a mold was measured by a θ/2 method.

### Preparation Example 1

SYLGARD184 Curing agent (containing a hydrosilyl group-containing polyorganosiloxane and a hydrosilylation catalyst, manufactured by Dow Corning Toray Co., Ltd) was added to SYLGARD184 (Vinyl group-containing polyorganosiloxane, manufactured by Dow Corning Toray Co., Ltd.), and they were stirred. Thereafter, the resultant was poured into a metal mold and cured at 100°C for 2 hours. Thereafter, the resultant was separated from the metal mold, and a silicone mold was obtained.

### Examples 1 to 3

The curable composition (product name "CELVENUS OUH106", where it contains a cationic curable compound and a photocationic polymerization initiator; 80 wt.% of the total amount of the cationic curable compound is an epoxy resin; a viscosity at 25°C and at a shear rate of 20 (1/s): 0.2 Pa·s; a breaking strain of the cured product (measured using a test piece 5B type in accordance with JIS-K7162: 1994): 0.8%; a light transmittance of the cured product (450 nm): 90% or greater; Tg of the cured product: 100°C or greater; and it was manufactured by Daicel Corporation) was applied to a mold that was obtained in Preparation Example 1 and included a recessed part having an inverted shape of the Fresnel lens described in the following table, and the mold was closed with a flat silicone mold from above. Thereafter, UV irradiation (Exposure amount: 3000 mJ/cm²) was performed, and the mold was separated from the flat silicone mold to obtain a molded product (Fresnel lens) (FIG. 1).

### Comparative Example 1

A molded product was obtained in the same manner as in Examples, except that a curable composition was used as the curable composition, in which 5 g of IRR-214K (Tricyclodecane dimethanol diacrylate, manufactured by DAICEL-ALLNEX LTD), 2.5 g of PETIA (pentaerythritol (tri/tetra) acrylate, available from DAICEL-ALLNEX LTD), 2.5 g of IBOA (isobornyl acrylate, available from DAICEL-ALLNEX LTD), and 0.3 g of IRGACURE184 (photo radical polymerization initiator, available from BASF) were stirred and mixed such that IRGACURE184 was completely dissolved (acrylic resin (A), a viscosity at 25°C and at a shear rate of 20 (1/s): 0.12 Pa·s, a breaking strain of the cured product (measured using a test piece 5B type in accordance with JIS-K7162: 1994): 1.0%).

### Comparative Example 2

A molded product was obtained in the same manner as in Examples except that a metal mold (a mold in which a SUS base material is subjected to nickel-phosphorus plating) was used instead of the silicone mold.

### Comparative Example 3

Production of the molded product was performed in the same manner as in Examples except that lupilon H4000 (thermoplastic resin, polycarbonate, manufactured by Mitsubishi Engineering-Plastics Corporation) was used and injection molded using a metal mold (a mold in which a SUS base material is subjected to nickel-phosphorus plating), but the molded product could not be taken out from the metal mold.

With respect to the molded product obtained in Examples and Comparative Examples, the releasability and the shape accuracy were evaluated by the following methods.

### Releasability

The appearance was visually observed, and the releasability was evaluated according to the following reference.

Good (good mold releasability): a missing part does not exist.

Poor (bad mold releasability): a missing part exists.

### Shape Accuracy

The appearance was visually observed, and shape accuracy was evaluated by counting the number of bubbles. In a case that the number of bubbles is large, the shape accuracy is low.

**Table 1**

| | Example 1 | Example 2 | Example 3 | Comparative Example 1 | Comparative Example 2 | Comparative Example 3 |
|---|---|---|---|---|---|---|
| Curable composition | OUH106 | OUH106 | OUH106 | Acrylic resin (A) | OUH106 | H4000 |
| Mold | Silicone | Silicone | Silicone | Silicone | Metal mold | Metal mold |
| Contact angle | 27 | 27 | 27 | 56 | 78 | Unmeasurable |
| W | 0.1 | 0.1 | 0.2 | 0.2 | 0.2 | 0.2 |
| h | 0.15 | 0.15 | 0.1 | 0.1 | 0.1 | 0.1 |
| h' | 0.45 | 0.35 | 0.15 | 0.15 | 0.15 | 0.15 |
| h/w | 1.5 | 1.5 | 0.5 | 0.5 | 0.5 | 0.5 |
| Releasability | Good | Good | Good | Good | Good | Poor |
| Number of bubbles | 0 | 0 | 0 | 3 | 5 | - |

To summarize the above, configurations according to the present invention and variations thereof will be described below.
[1] A Fresnel lens, wherein the Fresnel lens is a molded and cured product of a curable composition having a contact angle with respect to a mold of 50° or less, the Fresnel lens includes two or more prisms concentrically, and a cross-sectional face of the two or more prisms has a mountain-like shape in which a ratio (h/w) of a height (h) to a width (w) is 0.3 or greater, and the height (h) is 0.5 mm or less.
[2] The Fresnel lens according to [1], wherein the maximum thickness (h') is 1.0 mm or less (preferably 0.8 mm or less, particularly preferably 0.6 mm or less).
[3] The Fresnel lens according to [1] or [2], wherein a breaking strain (according to JIS-K7162:1994) of a cured product of the curable composition is from 0.1% to 30%.
[4] A method for producing a Fresnel lens, including molding and curing a curable composition by using a mold, wherein the following Fresnel lens is produced by using a curable composition having a contact angle with respect to a mold of 50° or less.
   The Fresnel lens includes two or more prisms concentrically, and a cross-sectional face of the prisms has a mountain-like shape in which a ratio (h/w) of a height (h) to a width (w) is 0.3 or greater, and the height (h) is 0.5 mm or less.
[5] The method for producing a Fresnel lens according to [4], wherein the mold is a silicone mold.
[6] The method for producing a Fresnel lens according to [4] or [5], wherein a viscosity of the curable composition at 25°C and a shear rate of 20 s⁻¹ is from 0.01 to 10.0 Pa·s (Preferably from 0.1 to 5.0 Pa·s, particularly preferably from 0.1 to 1.0 Pa s.).
[7] The method for producing a Fresnel lens according to any one of [4] to [6], wherein the curable composition is a cationic curable composition containing an epoxy resin as a curable compound.
[8] The method for producing a Fresnel lens according to [7], wherein the epoxy resin is a polyfunctional alicyclic epoxy compound.
[9] The method for producing a Fresnel lens according to [7] or [8], wherein 60 wt.% or greater (preferably 70 wt.% or greater, and particularly preferably 80 wt.% or greater) of the total amount of the cationic curable compound is an epoxy resin.
[10] The method for producing a Fresnel lens according to [8] or [9], wherein the polyfunctional alicyclic epoxy compound is a compound represented by Formula (i).
[11] The method for producing a Fresnel lens according to [8] or [9], wherein the polyfunctional alicyclic epoxy compound is at least one type of compound selected from the group consisting of 3,4-epoxycyclohexylmethyl(3,4-epoxy)cyclohexane carboxylate, (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[12] The method for producing a Fresnel lens according to [8] or [9], wherein the polyfunctional alicyclic epoxy compound is a compound represented by Formula (i), wherein X is a single bond or a linking group (excluding a group containing an ester bond).
[13] The method for producing a Fresnel lens according to [8] or [9], wherein the polyfunctional alicyclic epoxy compound is at least one type of compound selected from the group consisting of (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, and 1,2-bis(3,4-epoxycyclohexan-1-yl)ethane.
[14] The method for producing a Fresnel lens according to any one of [4] to [13], wherein the molding is performed by a nanoimprint method.
[15] The method for producing a Fresnel lens according to any one of [4] to [14], wherein a breaking strain (obtained by a measuring method according to JIS-K7162:1994) of a cured product of the curable composition is from 0.1% to 30%.

### Industrial Applicability

The Fresnel lens of the present invention includes two or more prisms (a prism that is composed of an incident surface and a reflective surface) concentrically, the two or more prisms being disposed at narrow pitches, having a steep slope from a protruded part to a recessed part, and not having a missing part, and thus, the Fresnel lens can exhibit excellent optical characteristics. Therefore, the Fresnel lens can be suitably used as, for example, a Fresnel lens for a sensor or a Fresnel lens for a camera for a mobile electronic device such as a mobile phone or a smart phone.

In addition, according to a method for producing a Fresnel lens of the present invention, a Fresnel lens can be accurately produced in which the prisms with a mountain-like shape are disposed at narrow pitches and have a steep slope from a protruded part to a recessed part.

### Reference Signs List

- 1: Prism
- 2: Incident surface
- 3: Reflective surface

## Claims

1. A Fresnel lens, wherein
the Fresnel lens is a molded and cured product of a curable composition having a contact angle with respect to a mold of 50° or less,
the Fresnel lens includes two or more prisms concentrically, and
a cross-sectional face of the two or more prisms has a mountain-like shape in which a ratio (h/w) of a height (h) to a width (w) is 0.3 or greater, and the height (h) is 0.5 mm or less.

2. The Fresnel lens according to claim 1, wherein
a breaking strain (according to JIS-K7162:1994) of a cured product of the curable composition is from 0.1% to 30%.

3. A method for producing a Fresnel lens, comprising:
molding and curing a curable composition by using a mold,
wherein the following Fresnel lens is produced by using a curable composition having a contact angle with respect to a mold of 50° or less,
the Fresnel lens includes two or more prisms concentrically, and
a cross-sectional face of the two or more prisms has a mountain-like shape in which a ratio (h/w) of a height (h) to a width (w) is 0.3 or greater, and the height (h) is 0.5 mm or less.

4. The method for producing a Fresnel lens according to claim 3, wherein
the mold is a silicone mold.

5. The method for producing a Fresnel lens according to claim 3 or 4, wherein
the curable composition is a cationic curable composition containing an epoxy resin as a curable compound.

6. The method for producing a Fresnel lens according to any one of claims 3 to 5, wherein
the molding is performed by a nanoimprint method.

7. The method for producing a Fresnel lens according to any one of claims 3 to 6, wherein
a viscosity of the curable composition at 25°C and a shear rate of 20 (1/s) is from 0.01 to 10.0 Pa·s.

8. The method for producing a Fresnel lens according to any one of claims 3 to 7, wherein
a breaking strain (according to JIS-K7162 : 1994) of a cured product of the curable composition is from 0.1% to 30%.
